# EUROPÄISCHE PATENTSCHRIFT

(11) **EP 2 284 413 B1**
(45) Veröffentlichungstag und Bekanntmachung des Hinweises auf die Patenterteilung: **17.04.2013**
(21) Anmeldenummer: 10170717.2
(22) Anmeldetag: 23.07.2010
(51) Int. Cl.: F16D 7/08

(54) **Drehmomentbegrenzungskupplung**
Torque limiting coupling
Couplage de limitation du couple

(30) Priorität: 13.08.2009 DE 102009037026
(43) Veröffentlichungstag der Anmeldung: 16.02.2011
(73) Patentinhaber: GKN Walterscheid GmbH, 53797 Lohmar (DE)
(72) Erfinder: Kämpf, Klaus, 53797, Lohmar (DE); Carstensen, Bernd, 53809, Ruppichteroth (DE)
(74) Vertreter: Müller, Thomas Michael

(56) Entgegenhaltungen:
- DE-A1- 3 034 606
- DE-A1- 3 344 043
- DE-A1- 10 201 988
- US-A- 4 294 340

## Beschreibung

Die Erfindung betrifft eine Drehmomentbegrenzungskupplung gemäß dem Oberbegriff des Anspruchs 1.

Eine solche Drehmomentbegrenzungskupplung ist aus der DE 33 44 043 A1 bekannt. Bei der dort offenbarte Drehmomentbegrenzungskupplung wird mittels einer Sperrklinke schlagartig abgeschaltet. Sie umfasst einen stößelartigen Aktuator, der auf eine Sperrklinke einwirkt, die ihrerseits mit einem Nocken auf dem Umfang der Schaltscheibe in Eingriff gebracht werden kann. Hierdurch wird die Schaltscheibe gegenüber der Kupplungsnabe verdreht, um die Kupplung abzuschalten. Nachdem die Schaltscheibe verdreht wurde, wird die Sperrklinke wieder außer Eingriff zum Nocken auf der Schaltscheibe gebracht. Gleichzeitig kommt die Sperrklinke in Eingriff mit einem Nocken auf dem Umfang der Kupplungsnabe, so dass diese abrupt gestoppt wird, um ein Nachdrehen der Kupplungsnabe zu verhindern.

Drehmomentbegrenzungskupplungen sind ferner aus dem Stand der Technik hinlänglich bekannt. Mit diesen können insbesondere Kräfte und/oder drehmomentübertragende Bauteile eines Antriebsstrangs sehr wirkungsvoll vor kritischen Belastungen beschützt werden, indem die Drehmomentbegrenzungskupplungen bei einer Überlast eine Kräfte- bzw. Drehmomentübertragung zwischen einer Antriebsseite und einer Abtriebsseite des Antriebsstrangs reduzieren oder zur Gänze unterbrechen können.

Die DE 30 34 606 A1 zeigt eine solche Drehmomentbegrenzungskupplung, bei der bei Überschreiten eines vorbestimmten Drehmoments die Mitnehmerkörper axial gegen die Federkraft der Federmittel aus den Ausnehmungen gedrückt werden und auf einer Seitenfläche der Kupplungshülse abrollen und dadurch die Schaltscheibe in ihre Freilaufstellung drehen, in der die Mitnehmerkörper in Ausnehmungen der Schaltscheibe eingreifen. In dieser Stellung ist die Kupplungsnabe antriebsmäßig von der Kupplungshülse getrennt, so dass kein Drehmoment zwischen der Kupplungsnabe und der Kupplungshülse übertragen werden kann. Ferner weist die Schaltscheibe auf ihrem Außenumfang einen radial nach außen weisenden Schaltnocken auf. Ein Schaltstößel ist zwischen einer Freigabeposition und einer Sperrposition verstellbar angeordnet. In der Sperrposition wirkt der Schaltstößel mit den Schaltnocken derart zusammen, dass bei Drehung der Drehmomentbegrenzungskupplung die Schaltscheibe in ihre Freilaufstellung überführt wird, so dass die Drehmomentübertragung unterbrochen ist. Mittels eines Rückstellnockens auf der Kupplungsnabe wird der Schaltstößel nach Verdrehen der Schaltscheibe zurück in die Freigabeposition bewegt. Nachteilig wirkt sich bei dieser Ausführungsform aus, dass nach Abschalten der Drehmomentbegrenzungskupplung diese bei geringen Drehzahlen automatisch wieder einschaltet, da die Schaltscheibe zu ihrer drehmomentübertragenden Stellung federbelastet ist. Hierdurch schaltet die Drehmomentbegrenzungskupplung auch bei einer Notsituation, in der die Drehmomentbegrenzungskupplung abgeschaltet wurde, automatisch wieder ein, wodurch eine erneute Gefahrensituation hervorgerufen werden kann.

Auch aus der Patentschrift DE 102 01 988 C2 ist eine gattungsgemäße Drehmomentbegrenzungskupplung bekannt, mittels der ermöglicht wird, bei Auftreten einer Überlast in einem Antriebsstrang mit sich drehenden Bauteilen eine Kraft- und/oder Drehmomentübertragung zu unterbrechen und nach Beseitigung der Überlast anschließend ein automatisches Einschalten der Drehmomentbegrenzungskupplung bei einer geringen Einschaltdrehzahl wieder zu ermöglichen. Üblicherweise beträgt die Einschaltdrehzahl etwa 100 U/min. Ist ein automatisches Einschalten der Drehmomentbegrenzungskupplung nicht erwünscht, ist es selbst bei sehr geringen Drehzahlen möglich, eine Not-Abschaltung der Drehmomentbegrenzungskupplung beizubehalten und ein automatisches Wiedereinschalten der Drehmomentbegrenzungskupplung durch Betätigen einer entsprechenden Sperrklinke zu unterbinden.

Die in der Patentschrift DE 102 01 988 C2 beschriebene Notabschalteigenschaft der Drehmomentbegrenzungskupplung weist allerdings den Nachteil auf, dass ein Einschalten der Drehmomentübertragung erst bei Stillstand der Kupplung erfolgen kann, nämlich indem manuell entsprechende Stifte entsperrt werden.

Es ist daher Aufgabe der vorliegenden Erfindung, eine Drehmomentbegrenzungskupplung mit einer variablen Wiedereinschaltdrehzahl bereitzustellen.

Diese Aufgabe wird durch eine Drehmomentbegrenzungskupplung gemäß Anspruch 1 gelöst. Vorteilhafte Ausführungsformen ergeben sich aus den Unteransprüchen.

Der Vorteil dieser Anordnung ergibt sich daraus, dass das durch das Bremselement ausgeübte Bremsmoment der Federkraft, mit der die ersten Federmittel die Schaltscheibe in Richtung der Einschaltstellung beaufschlagen, entgegengesetzt ist. Somit beaufschlagt das auf die Schaltscheibe mittels des Bremselements aufgebrachte Drehmoment die Schaltscheibe in Richtung ihrer Freilaufstellung. Bei geeigneter Auslegung des Bremselement kann hierdurch die Drehmomentbegrenzungskupplung durch den Aktuator und das Bremselement gegen die Federkraft der ersten Federmittel in der Freilaufstellung gehalten werden.

Die hier beschriebene Komplettabschaltung einer Drehmomentbegrenzungskupplung über ein Bremselement geht von einer Kupplung in drehendem und drehmoment-übertragendem Zustand aus. Somit bewirkt das durch den Aktuator gegen Drehung gehaltene Bremselement ein Drehmoment auf die Schaltscheibe, welches folglich auch als Bremsmoment bezeichnet wird.

Bei einer ersten Ausführungsform ist vorgesehen, dass das durch das Bremselement aufgebrachte Bremsmoment die Federkraft der ersten Federmittel soweit übersteigt, dass das Bremsmoment die Schaltscheibe in der Freilaufstellung gegen die ersten Federmittel hält. Hierdurch wird gewährleistet, dass die Schaltscheibe, die von der Einschaltstellung in die Freilaufstellung überführt wurde, auch bei Drehzahlreduzierung der Drehmomentkupplung sicher in der Freilaufstellung gehalten wird. Hierbei kann die Bremsstellung des Aktuators so lange beibehalten werden, bis die Drehzahl der Drehmomentbegrenzungskupplung auf eine gewünschte Drehzahl abgefallen ist. Somit ist es möglich, durch Überführen des Aktuators in die Freigabestellung die Kupplung automatisch einzukuppeln, während sich die Drehmomentbegrenzungskupplung noch dreht. Es muss also nicht gewartet werden, bis die Kupplungsdrehzahl auf Null abgefallen ist. Diese Funktionalität entspricht der eines Kupplungsautomaten.

In Konkretisierung ist das Bremselement in der Freigabestellung des Aktuators gegenüber der Schaltscheibe frei drehbar. Bevorzugt ist das Bremselement einseitig oder beidseitig mit Reibbeläge bestückt, worüber der Reibkontakt zu der Schaltscheibe hergestellt wird. Durch die Drehbarkeit des Bremselements gegenüber der Schaltscheibe ist gewährleistet, dass eine Relativdrehzahl zwischen beiden entstehen kann. Da das Bremselement durch den Aktuator arretiert wird, kann über den Reibkontakt ein Bremsmoment auf die Schaltscheibe ausgeübt werden.

Vorgesehen ist, dass der Aktuator mit einer Schaltfläche des Bremselements zusammenwirkt. Beispielsweise hintergreift der Aktuator in der Bremsstellung die Schaltfläche des Bremselements, so dass das Bremselement bei Drehung der Schaltscheibe gegenüber dieser zurückgehalten wird. Das Bremselement beaufschlagt somit in der Bremsstellung des Aktuators die Schaltscheibe mit einem Bremsmoment. In vorteilhafter Weise kann vorgesehen sein, dass das Bremselement über ihren Umfang verteilt mehrere Zähne aufweist. Hierbei weist jeder Zahn in der einen Umfangsrichtung eine radial gerichtete Schaltfläche auf und in der anderen Umfangsrichtung eine rampenförmige Anlauffläche. Hierüber wird gewährleistet, dass bei Drehung der Drehmomentbegrenzungskupplung in der einen Drehrichtung der Aktuator mit den radial gerichteten Schaltflächen des Bremselements zusammenwirkt und in der anderen Drehrichtung über die rampenförmigen Anlaufflächen abgleitet und das Bremselement drehen kann, auch wenn sich der Aktuator in der Bremsstellung befindet.

Bevorzugt ist der Aktuator in eine Sperrstellung verstellbar, in der er mit der Schaltscheibe derart zusammenwirkt, dass die Schaltscheibe von der Einschaltstellung zur Freilaufstellung überführbar ist. Die Sperrstellung ist eine Stellung des Aktuators, in die sich dieser gelangt, wenn er ausgehend von der Freigabestellung über die Bremsstellung hinaus bewegt wird. Bevorzugt wirkt der Aktuator mit einer radial verlaufenden Schaltfläche der Schaltscheibe zusammen. Vorgesehen ist, dass der Aktuator in der Sperrstellung ein gleicher Weise wie in der Bremsstellung mit dem Bremselement zusammenwirkt.

Da das Abschaltmoment zum Bewegen der Schaltscheibe in die Freilaufstellung deutlich höher als das Haltemoment zum Halten der Schaltscheibe in der Freilaufstellung ist, ergibt sich durch den formschlüssigen Eingriff des Aktuators in die Schaltscheibe das erforderliche erhöhte Abschaltmoment, wohingegen das Bremselement und die Reibbeläge für das Haltemoment nur so dimensioniert werden müssen, dass sie die Schaltscheibe, die mittels des Aktuators in die Freilaufstellung überführt wurde, entgegen der Kraft der ersten Federmittel halten. Insbesondere ist vorgesehen, dass die Schaltscheibe über den Umfang mehrere Schaltnocken aufweist, die in der einen Umfangsrichtung radial gerichtete Schaltflächen und in der anderen Umfangsrichtung rampenförmige Anlaufflächen aufweisen.

Bevorzugt ist weiterhin vorgesehen, dass der Aktuator in der Sperrstellung durch Drehung der Kupplungsnabe derart mit dieser zusammenwirkt, dass der Aktuator in die Bremsstellung überführbar ist. Insbesondere wirkt der Aktuator mit einer rampenförmigen Anlauffläche der Kupplungsnabe zusammen. In vorteilhafter Ausgestaltung wirkt der Aktuator in der Bremsstellung mit dem Bremselement derart zusammen, dass das Bremselement gegen Drehung gehalten wird. In vorteilhafter Weise wird hierdurch gewährleistet, dass die Schaltscheibe durch das gegen Drehung gehaltene Bremselement weiterhin in der Freilaufstellung gehalten wird, andererseits aber nicht an einem Weiterdrehen durch den Aktuator gehindert wird, da sich dieser in der Bremsstellung außerhalb des Drehradius der Schaltscheibe befindet.

Bei der ersten Ausführungsformen sind bevorzugt dritte Federmittel vorgesehen, die das Bremselement zumindest mittelbar axial gegen die Schaltscheibe beaufschlagen. Dabei umfassen die dritten Federmittel Druckfedern, die über einen Umfang verteilt angeordnet sind. Bevorzugt sind die dritten Federmittel auf ihrer der Schaltscheibe abgewandten Seite an einer Spannplatte abgestützt, wobei die dritten Federmittel und die Spannplatte zumindest mittelbar mit der Schaltscheibe drehfest verbunden sind. Als Vorteile ergeben sich hieraus eine kompakte Bauweise und durch die umfängliche Anordnung der Federmittel eine besonders gleichmäßige Beaufschlagung des Bremselements gegen die Schaltscheibe.

Bevorzugt ist der Aktuator als Sperrklinke gestaltet. Insbesondere ist vorgesehen, dass die Sperrklinke um eine Schwenkachse zwischen der Freigabestellung und der Sperrstellung schwenkbar ist, wobei die Schwenkachse parallel und versetzt zu der Längsachse der Drehmomentbegrenzungskupplung zeigt.

In Konkretisierung ist für die erste Ausführungsformen vorgesehen, dass das Bremselement eine Bremsscheibe umfasst, deren Vorteil in einem einfachen Aufbau besteht und auf die, gleich einer Kupplungsscheibe, mit herkömmlichen Mitteln die Reibbeläge aufgebracht werden können.

Als Variante der ersten Ausführungsform kann vorgesehen sein, dass der Aktuator, die Bremsscheibe und die dritten Federmittel derart stark dimensioniert sind, dass durch das auf die Schaltscheibe ausgeübte Bremsmoment die Schaltscheibe von der Einschaltstellung zur Freilaufstellung überführbar ist. In diesen Fall ist kein formschlüssiger Eingriff des Aktuators in die Schaltscheibe erforderlich.

Bei einer zweiten Ausführungsform ist vorgesehen, dass das durch das Bremselement aufgebrachte Bremsmoment die Federkraft der ersten Federmittel und die Reibung zwischen den Mitnehmern und der Schaltscheibe soweit übersteigt, dass das Bremsmoment die Schaltscheibe von der Einschaltstellung in der Freilaufstellung gegen die ersten Federmittel und die Reibung zwischen den Mitnehmern und der Schaltscheibe überführt. Da bei diesem Freischalten keine Relativdrehung zwischen Kupplungshülse und Kupplungsnabe infolge einer Drehmomentüberschreitung stattfindet, stellt sich auch keine Abrollbewegung der Mitnehmer in den ersten Ausnehmungen der Kupplungsnabe ein, die wiederum für ein Abrollen der Mitnehmer auf der Schaltscheibe sorgt. Sofern also noch keine Drehmomentüberschreitung stattgefunden hat, kann die Schaltscheibe nur in die Freilaufstellung überführt werden, wenn die Mitnehmer auf ihr abgleiten. Das zur Überwindung dieser Reibung und der ersten Federmittel erforderliche Bremsmoment wird in vorteilhafter Weise von dem Bremselement gemäß der zweiten Ausführungsform aufgebracht. Hierdurch hat die zweite Ausführungsform eine Not-Stop-Funktion, die in vorteilhafter Weise auf Grund der Dimensionierung des Aktuators und des Bremselements gleichzeitig dazu genutzt werden kann, nachlaufende Massen, dass heißt insbesondere die über die Drehmomentbegrenzungskupplung angetriebene Arbeitsmaschine, abzubremsen.

Bevorzugt umschlingt das Bremselement einen Umfang der Schaltscheibe, wobei das Bremselement auch in der Freigabestellung des Aktuators gegenüber der Schaltscheibe drehfest gehalten ist

Hierdurch ergibt sich gleichermaßen ein einfacher und robuster Aufbau der Bremsvorrichtung. Indem das Bremselement die Schaltscheibe umschlingt kann es bei Überschreiten einer Verschleißgrenze leicht gegen ein neues Bremselement getauscht werden, ohne dass die Drehmomentbegrenzungskupplung, von einem Gehäuse abgesehen, demontiert werden muss. Dadurch, dass das Bremselement sowohl in der Sperrstellung als auch in der Freigabestellung nicht rotiert, muss keine Lagerung für eine Drehung vorgesehen werden.

Bevorzugt ist ein Ende des Bremselements gegenüber der Schaltscheibe zumindest in einer Richtung verstellbar. Hierbei ist insbesondere vorgesehen, dass diese Verstellrichtung etwa tangential zu der Schaltscheibe verläuft. Bevorzugt greift der Aktuator an dem verstellbaren Ende des Bremselements an.

Hierdurch kann in vorteilhafter Weise das Bremselement mit einem seiner Enden an einem bezogen auf die Drehmomentbegrenzungskupplung ortsfesten Bauteil befestigt werden und über das andere Ende das Bremselements über den Umfang der Schaltscheibe in eine Sperrstellung zugezogen werden, so dass ein Reibkontakt zwischen Bremselement und Schaltscheibe entsteht.

Bevorzugt umfasst der Aktuator einen elektrisch angesteuerten und schwenkbar angeordneten Bremshebel. Hierbei wird der Bremshebel in einem mittleren Bereich ortsfest aber schwenkbar gehalten. Das eine Ende des Bremshebels ist mit dem verstellbaren Ende des Bremselements verbunden und das andere Ende des Bremshebels ist mit einem elektrisch angesteuerten Verstellelement verbunden. Bevorzugt ist der Bremshebels in einer Grundstellung etwa rechtwinklig zu dem etwa tangential zu der Schaltscheibe verlaufenden verstellbaren Ende des Bremselements ausgerichtet.

In Konkretisierung ist für die zweite Ausführungsformen vorgesehen, dass das Bremselement ein Bremsband umfasst.

Als Variante der zweiten Ausführungsform ist denkbar, dass ein radial äußerer Abschnitt der Schaltscheibe als Bremsscheibe ausgebildet ist und dass als Aktuator ein Bremssattel vorgesehen ist, der die Bremsscheibe umgreift und mit einem Bremsmoment beaufschlagt. Auch hier ist das aufzubringende Bremsmoment derart dimensioniert, dass die Schaltscheibe von der Einschaltstellung zur Freilaufstellung überführbar ist und kein formschlüssiger Eingriff des Aktuators in die Schaltscheibe erforderlich ist.

Bevorzugte Ausführungsbeispiele werden anhand der folgenden Zeichnungsfiguren näher erläutert. Hierin zeigen:
Figur 1 eine erfindungsgemäße Drehmomentbegrenzungskupplung in einer ersten Ausführungsform
   a) im Längsschnitt in Einschaltstellung,
   b) im Längsschnitt in Freilaufstellung,
Figur 2 eine erfindungsgemäße Drehmomentbegrenzungskupplung
   a) im Querschnitt entlang der Schnittlinie A-A gemäß Fig. 1 b,
   b) in Seitenansicht,
Figur 3 eine erfindungsgemäße Drehmomentbegrenzungskupplung in einer zweiten Ausführungsform
   a) im Längsschnitt in Einschaltstellung,
   b) im Längsschnitt in Freilaufstellung,
Figur 4 eine erfindungsgemäße Drehmomentbegrenzungskupplung
   a) im Querschnitt entlang der Schnittlinie A-A gemäß Fig. 3a,
   b) im Querschnitt entlang der Schnittlinie B-B gemäß Fig. 3a mit in die Freilaufstellung überführter Schaltscheibe,
Figur 5 eine erfindungsgemäße Drehmomentbegrenzungskupplung in einer dritten Ausführungsform
   a) im Längschnitt,
   b) im Querschnitt.

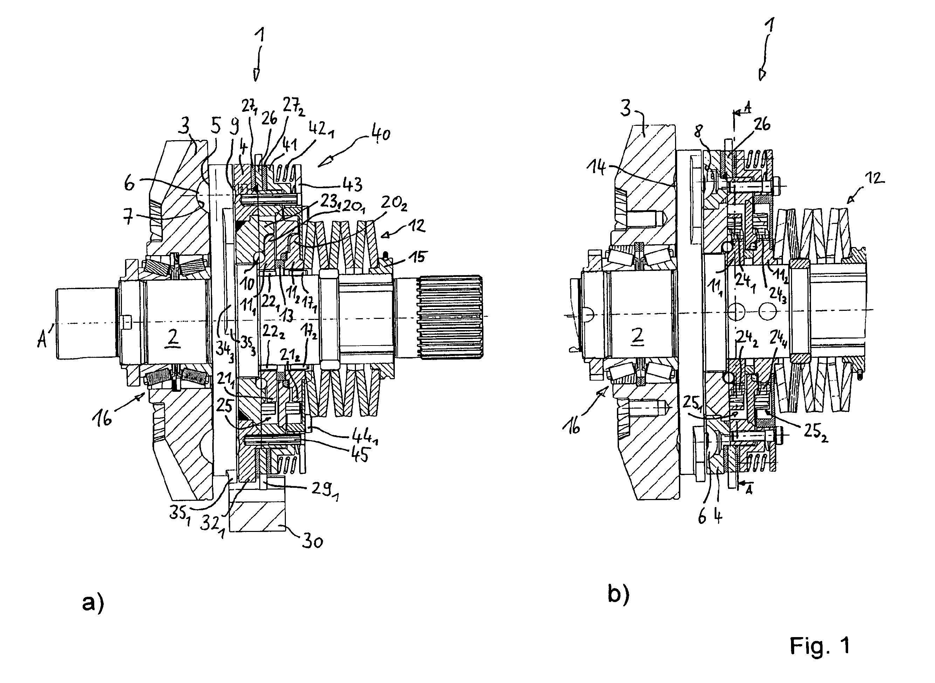

Die Figuren 1a bis 2b zeigen eine erste Ausführungsform einer Drehmomentsbegrenzungskupplung 1 und werden zunächst gemeinsam beschrieben. Die Drehmomentbegrenzungskupplung 1 ist um eine Längsachse A drehbar angeordnet und umfaßt eine Kupplungsnabe 2, eine Kupplungshülse 3 sowie eine Schaltscheibe 4. Wie dargestellt, kann die Kupplungshülse 3 beispielsweise als Tellerrad gestaltet sein. Die Kupplungsnabe 2 weist umfangsverteilte Durchbrüche 5 auf, in denen als Wälzkörper wirkende Mitnehmer 6 parallel zur Längsachse A verstellbar gehalten sind. Die Kupplungshülse 3 weist zu den Durchbrüchen 5 korrespondierende erste Ausnehmungen 7 auf. Die Schaltscheibe 4 weist zu den Durchbrüchen 5 korrespondierende zweite Ausnehmungen 8 auf. Die Schaltscheibe 4 ist um die Längsachse A relativ zur Kupplungsnabe 2 zwischen einer Einschaltstellung (Fig. 1a) und einer Freilaufstellung (Fig. 1 b) drehbar angeordnet. In der Einkuppelposition der Schaltscheibe 4 ragen die Mitnehmer 6 in Richtung zur Kupplungshülse 3 aus den Durchbrüchen 5 heraus und greifen in die ersten Ausnehmungen 7 ein. Auf der der Kupplungshülse 3 abgewandten Seite ragen die Mitnehmer 6 ebenfalls aus den Durchbrüchen 5 heraus und sind gegen Laufrillen 9, die in Umfangsrichtung verlaufend zwischen den zweiten Ausnehmungen 8 der Schaltscheibe 4 angeordnet sind, axial abgestützt. In der Einschaltstellung sind die ersten Ausnehmungen 7 der Kupplungshülse 3 und die zweiten Ausnehmungen 8 der Schaltscheibe 4 bezüglich ihrer Drehposition versetzt zueinander angeordnet.

Die Schaltscheibe 4 ist über ein Drucklager 10 gegen eine Reihenanordnung aus erstem Druckring 11₁, Distanzring 13 und zweitem Druckring 11₂ axial gegen zweite Federmittel beispielsweise in Form eines Tellerfederpaktes 12 abgestützt. Die Druckringe 11₁, 11₂ sind über Passfedern 22₁, 22₂, 17₁, 17₂ auf der Kupplungsnabe 2 axial verschiebbar und drehfest festgelegt. Das Tellerfederpakt 12 steht unter Vorspannung und beaufschlagt somit mittelbar die Schaltscheibe 4 in axialer Richtung mit Kraft. Das Tellerfederpaket 12 ist gegen einen Stützring 15, der fest mit der Kupplungsnabe 2 verbunden ist, abgestützt. Über diese vorgespannte Anordnung sind die Mitnehmer 6 in den ersten Ausnehmungen 7 gehalten.

Ein Überschreiten eines durch die beschriebene axiale Vorspannung voreinstellbaren Grenzdrehmoments bewirkt eine Relativdrehung von Kupplungshülse 3 und Kupplungsnabe 2. Die Mitnehmer 6 rollen hierdurch in den ersten Ausnehmungen 7 der Kupplungshülse 3 ab und werden gegen die Federkraft des Tellerfederpakets 12 aus diesen herausgedrückt, wobei dieses durch eine axiale Bewegung der Schaltscheibe 4 in Richtung auf das Tellerfederpaket 12 zusammengedrückt wird. Die Mitnehmer 6 rollen weiterhin in den ersten Laufrillen 9 der Schaltscheibe 4 sowie in zweiten Laufrillen 14 der Kupplungshülse 3 ab, wobei aufgrund der Abrollbewegungen der Mitnehmer 6 die Schaltscheibe 4 relativ zur Kupplungsnabe 2 um die Längsachse A gedreht wird. In der Freilaufstellung der Schaltscheibe 4 greifen die Mitnehmer 6 in die zweiten Ausnehmungen 8 ein, wobei die Schaltscheibe 4 aufgrund der Federkraft des Tellerfederpakets 12 axial in Richtung zur Kupplungshülse 3 bewegt wird. In dieser Freilaufstellung ist die Drehmomentübertragung zwischen der Kupplungshülse 3 und der Kupplungsnabe 2 unterbrochen, so dass sich die Kupplungshülse 3 über eine Wälzlageranordnung 16 relativ zur Kupplungsnabe 2 frei drehen kann, wobei die Mitnehmer 6 in den zweiten Laufrillen 14 abrollen.

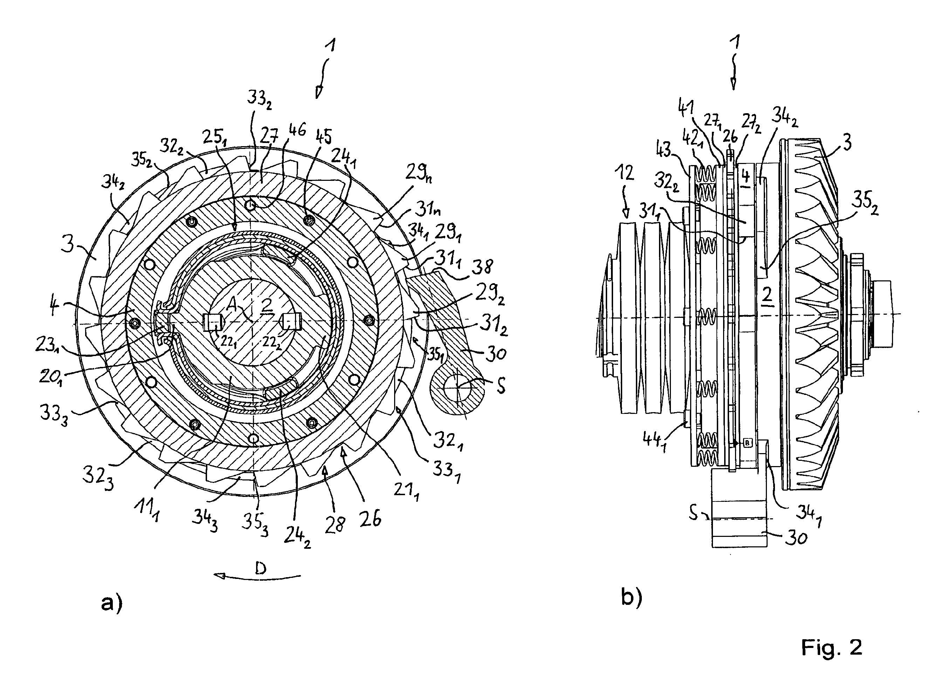

In der Figur 2a ist die Drehmomentbegrenzungskupplung 1 in Einschaltstellung in einem Querschnitt gezeigt. Die Kupplungsnabe 2, der Druckring 11₁ mit radialen Vorsprüngen 20₁, 21₁, der über zwei Passfedern 22₁, 22₂ drehfest und axial verschiebbar auf der Kupplungsnabe 2 gehalten ist, die Schaltscheibe 4 mit axialen Vorsprüngen 23₁, 24₁, 24₂, erste Federmittel in Form eines Spannklemmenpaketes 25₁, ein Reibbelag 27₁ und ein Zahnkranz 28 auf dem Umfang der Bremsscheibe 26 sind konzentrisch zueinander angeordnet. Der Zahnkranz 28 umfasst eine Mehrzahl an Zähnen 29₁, 29₂, 29ₙ, wobei die Anzahl n der Zähne 29₁, 29₂, 29ₙ je nach Einsatzzweck der Drehmomentbegrenzungskupplung 1 variieren kann. Jeder Zahn 29₁, 29₂, 29ₙ weist eine radial verlaufende Schaltfläche 31₁, 31₂, 31ₙ auf. Hinter dem Zahnkranz 28 sind, teilweise durch diesen verdeckt, Schaltnocken 32₁, 32₂, 32₃ mit radial verlaufenden Schaltflächen 33₁, 33₂, 33₃ auf dem Umfang der Schaltscheibe 4 und Steuernocken 34₁, 34₂, 34₃ mit rampenförmigen Anlaufflächen 35₁, 35₂, 35₃ auf dem Umfang der Kupplungsnabe 2 zu erkennen.

Zu erkennen ist, dass die axialen Vorsprünge 23₁, 24₁, 24₂ der Schaltscheibe 4 den Druckring 11₁ radial umgreifen. Das Spannklemmenpaket 25₁ wird von den axialen Vorsprüngen 24₁, 24₂ radial geführt und stützt sich in Umfangsrichtung derart sowohl gegen den radialen Vorsprung 20₁ des Druckrings 11₁, als auch gegen den axialen Vorsprung 23₁ der Schaltscheibe 4 ab, dass es die Schaltscheibe 4 zur Einnahme ihrer Einschaltstellung beaufschlagt, wie in Fig. 2a dargestellt. In der in einem Querschnitt nicht dargestellten Freilaufstellung ist die Schaltscheibe 4 gegen den Druckring 11₁ so weit in Umfangsrichtung verdreht, dass einer ihrer axialen Vorsprünge 24₁, 24₂ an dem radialen Vorsprung 21₁ des Druckrings 11₁ anliegt, so dass eine weitere Verdrehung nicht möglich ist. Während jeder Verdrehposition der Schaltscheibe 4 und des Druckrings 11₁ zueinander, übt das Spannklemmenpaket 25₁ eine Rückstellmoment in Richtung der in Fig. 2a gezeigten Einschaltstellung aus, die somit als Grundstellung bezeichnet werden kann.

In den Figuren 1a und 1 b ist eine weitere Anordnung gezeigt, die ein weiteres Rückstellmoment auf die Schaltscheibe 4 ausübt, bestehend aus einer Zwischenscheibe 18, die verdrehfest mit der Schaltscheibe 4 verbunden ist und axiale Vorsprünge 23₂, 24₃, 24₄ aufweist, einem zweiten Spannklemmenpaket 25₂ und dem Druckring 11₂, der radiale Vorsprünge 20₂, 21₂ aufweist. Die Anordnung und das Ineinandergreifen der Bauteile ist analog zu der Anordnung, die den Druckring 11₁ und das Spannklemmenpaket 25₁ umfasst.

Weiterhin ist in den Figuren 1a, 2a und 2b eine Sperrklinke 30 dargestellt, die an einem nicht dargestellten Träger zwischen einer Freigabestellung und einer Sperrstellung um eine Schwenkachse S, die versetzt parallel zu der Drehachse A verläuft, schwenkbar gehalten ist, wobei das Schwenken durch eine nicht näher beschriebene Vorrichtung erfolgt, die beispielsweise hydraulisch oder pneumatisch betätigt sein kann. Die Sperrklinke 30 ist in eine Bremsstellung verschwenkt, greift zwischen zwei Zähne 29₁, 29₂ des Zahnkranzes 28 ein und liegt auf einem Steuernocken 34₁ der Kupplungsnabe 2 auf. Im folgenden werden das Zusammenwirken der Sperrklinke 25 mit der Drehmomentbegrenzungskupplung 1 und die unterschiedlichen Schaltstellungen beschrieben, wobei von einer fortlaufenden Drehung in Drehrichtung D der Kupplung 1 ausgegangen wird:

Eine Anschlagfläche 38 der Sperrklinke 30 stößt an die Schaltfläche 31₁ der Bremsscheibe 26 und hält diese gegen Drehung zurück. Anschließend dreht sich der Steuernocken 34₁ unter der Sperrklinke 25 weg, so dass diese durch Weiterschwenken in die Sperrposition überführt werden kann. In der Sperrposition stößt die Anschlagfläche 38 der Sperrklinke 30 gegen die Schaltfläche 33₂ der Schaltscheibe 4 und hält diese gegen Drehung, d.h. auch gegen die sich drehende Kupplungsnabe 2, zurück, so dass die Schaltscheibe 4 in ihre Freilaufstellung überführt wird. In dieser Stellung sind die ersten Ausnehmungen 7, die Durchbrüche 5 und die zweiten Ausnehmungen 8 axial fluchtend zueinander ausgerichtet, so dass sich die Mitnehmer 6 von den ersten in die zweiten Ausnehmungen 7, 8 bewegen können. Anschließend wird die Sperrklinke 25 durch den Steuernocken 34₂ der sich weiterdrehenden Kupplungsnabe 2 erneut in die Bremsstellung überführt, in der sie weiterhin an die Schaltfläche 31₁ der Bremsscheibe 26 stößt und diese gegen Drehung zurückhält.

Die Bremsscheibe 27 ist Teil einer Bremsanordnung 40, wie aus Fig. 1 a, 1 b und teilweise 2b zu erkennen ist, die ferner Reibbelägen 27₁, 27₂, eine Druckplatte 41, eine Mehrzahl umfangsverteilter Druckfedern 42₁, 42₂, 42ₙ, eine Spannplatte 43, eine Mehrzahl umfangsverteilter Bolzen 44₁, 44₂, 44ₙ und Stifte 451, 452_{,} 45ₙ umfasst. Die Druckplatte 41 und die Spannplatte 43 sind mittels der Bolzen 44₁, 44₂, 44ₙ und der Stifte 45₁, 45₂, 45ₙ auf der den zweiten Ausnehmungen 8 der Schaltscheibe 4 abgewandten Seite an dieser gehalten, wobei die Druckplatte 41 gegenüber der Schaltscheibe 4 axial verschiebbar ist. Die Druckfedern 42₁, 42₂, 42ₙ sind parallel zur Längsachse A zwischen der Druckplatte 41 und der Spannplatte 43 unter Vorspannung gehalten und beaufschlagen die Druckplatte 41 in Richtung der Schaltscheibe 4. Zwischen der Druckplatte 41 und der Schaltscheibe 4 sind die Bremsscheibe 26 und die zu beiden Seiten der Bremsscheibe 26 angeordneten Reibbeläge 27₁, 27₂ geführt. Durch diese axiale Kraftbeaufschlagung der Bremsanordnung 40 wird die Bremsscheibe 26 in Reibkontakt mit der Schaltscheibe 4 gehalten.

Wurde die Schaltscheibe 4, wie zuvor beschrieben, durch das Zusammenwirken mit der Sperrklinke 30 in ihre Freilaufstellung überführt und befindet sich die Sperrklinke 30 anschließend in der Bremsstellung, in der sie die Bremsscheibe 26 gegen Drehung zurückhält, übt die Bremsscheibe 26 infolge des Reibkontaktes ein Bremsmoment auf die Schaltscheibe 4 aus. Dieses Bremsmoment ist bei der vorliegenden Ausführungsform der Drehmomentbegrenzungskupplung 1 so dimensioniert, dass es die Schaltscheibe 4, die durch das Spannklemmenpaket 25 in Richtung ihrer Einschaltstellung beaufschlagt wird, gegen das Moment des Spannklemmenpakets 25 in der Freilaufstellung hält. Insbesondere wird die Schaltscheibe 4 auch weiterhin in der Freilaufstellung gehalten, wenn sich die Relativdrehzahl zwischen Kupplungshülse 3 und Kupplungsnabe 2 reduziert.

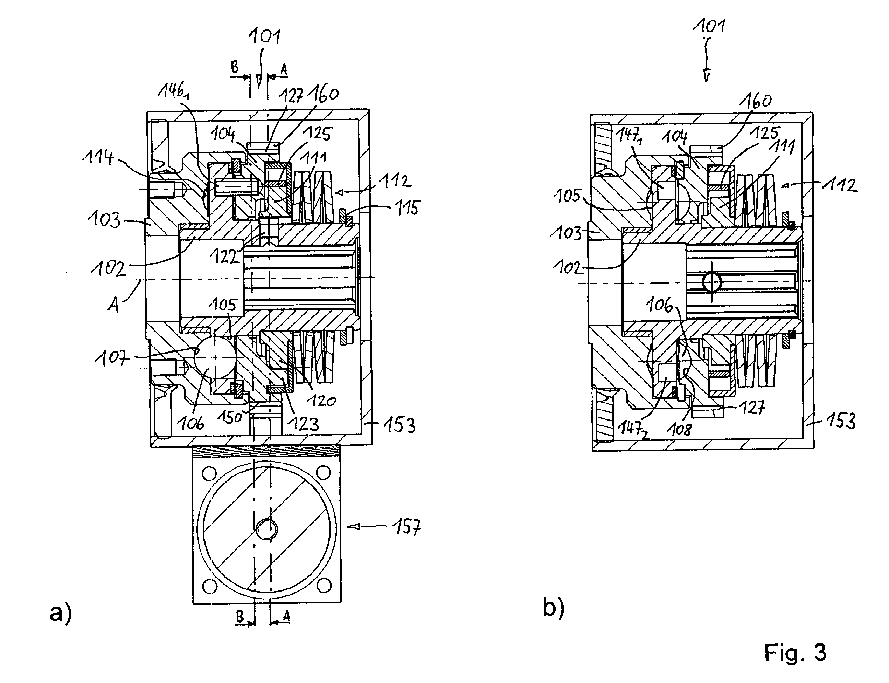

Die Figuren 3a bis 4b zeigen eine zweite Ausführungsform einer Drehmomentsbegrenzungskupplung 101 und werden zunächst gemeinsam beschrieben. Die grundsätzliche Funktion hinsichtlich der Drehmomentbegrenzung der Kupplung 101 entspricht derjenigen, die zu der ersten Ausführungsform gemäß den vorangegangen Figuren beschrieben wurde: Im folgenden werden die Unterschiede zu der ersten Ausführungsform beschrieben und gleiche bzw. entsprechende Bauteile sind mit um die Ziffer 100 hochgesetzte Bezugszeichen versehen.

Die Schaltscheibe 104 ist über ein Drucklager 110 gegen einen Druckring 111 axial gegen zweite Federmittel beispielsweise in Form eines Tellerfederpaktes 112 abgestützt. Das Tellerfederpakt 112 steht unter Vorspannung und beaufschlagt somit mittelbar die Schaltscheibe 104 in axialer Richtung mit Kraft. Über diese vorgespannte Anordnung sind die Mitnehmer 106 in den ersten Ausnehmungen 107 gehalten.

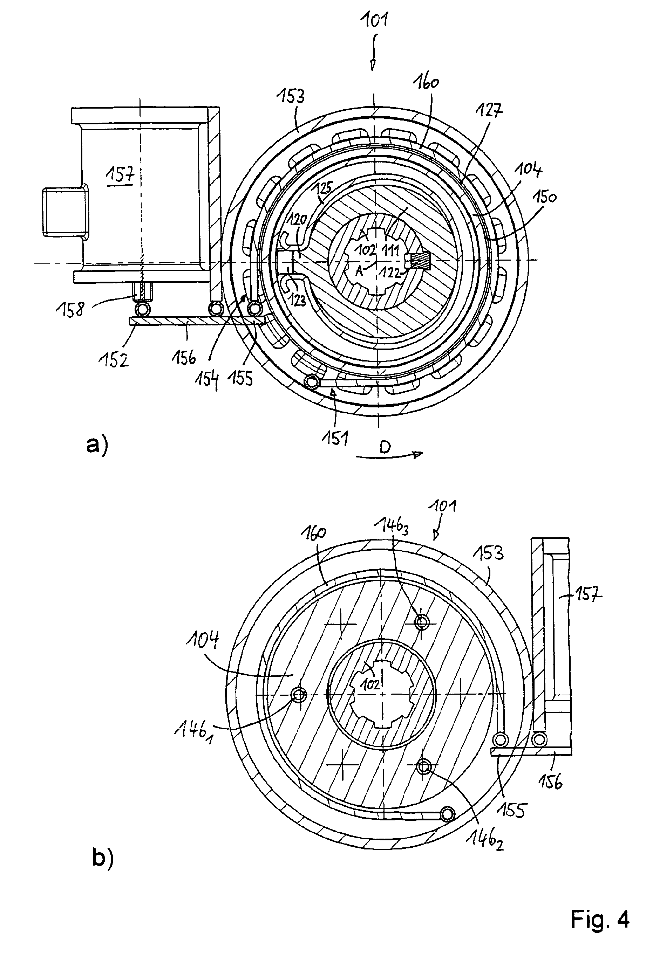

Die Relativdrehung zwischen Schaltscheibe 104 und Kupplungsnabe 102 während des Übergangs von der Einschaltstellung in die Freilaufstellung wird begrenzt durch drei Sperrstift 146₁, 146₂, 146₃, die parallel zur Längsachse A auf einem Umfang in der Schaltscheibe 104 festgelegt sind, wie in den Fig. 3a und 4b zu erkennen ist. Jeder Sperrstift 146₁, 146₂, 146₃ greift in jeweils eine auf einem Umfang der Kupplungsnabe 102 angeordneten Nut 147₁, 147₂, 147₃ ein.

In der Figur 4a ist die Drehmomentbegrenzungskupplung 101 in Einschaltstellung in einem Querschnitt gezeigt. Der Druckring 111 mit einem radialen Vorsprung 120, der über eine Passfeder 122 drehfest und axial verschiebbar auf der Kupplungsnabe 102 gehalten ist, die Schaltscheibe 104 mit einem axialen Vorsprung 123, erste Federmittel in Form einer Spannklemme 125 und ein Reibbelag 127 sind konzentrisch zueinander angeordnet. Die Spannklemme 125 wird von dem Druckring 111 im Bereich des radialen Vorsprung 120 und auf einem dem Vorsprung 120 gegenüberliegenden Umfangsbereich radial geführt und stützt sich in Umfangsrichtung sowohl gegen den radialen Vorsprung 120 des Druckrings 111, als auch gegen den axialen Vorsprung 123 der Schaltscheibe 104 ab, so dass sie die Schaltscheibe 104 zur Einnahme ihrer Einschaltstellung beaufschlagt, wie in Fig. 4a dargestellt. In der Einschaltstellung liegen die Sperrstifte 146₁, 146₂, 146₃ in den Nuten 147₁, 147₂, 147₃ der Schaltscheibe 104 in der einen Umfangsrichtung an. In der in einem Querschnitt nicht dargestellten Freilaufstellung ist die Schaltscheibe 104 gegen den Druckring 111 so weit in Umfangsrichtung verdreht, dass sich die Sperrstifte 146₁, 146₂, 146₃ in den Nuten 147₁, 147₂, 147₃ der Schaltscheibe 104 in der entgegen gesetzten Umfangsrichtung abstützen, so dass eine weitere Verdrehung nicht möglich ist. In der Freilaufstellung kann die Kupplungshülse 103 über eine nicht dargestellte Lageranordnung relativ zur Kupplungsnabe 102 frei drehen.

Weiterhin ist in den Figuren 3a bis 4b eine Bremsband 160 zu erkennen, dass einen Umfang 150 der Schaltscheibe 104, auf dem eine Reibbelag 127 aufgebracht ist, etwa zu drei Vierteln umschlingt. Das eine Ende 151 des Bremsbandes 160 ist mit einem bezüglich der Kupplung 101 drehfesten Kupplungsgehäuse 153 verbunden. Das andere Ende 154 des Bremsbandes 160 ist mit dem einen Ende 155 eines Bremshebels 156 verbunden, der in einem mittleren Bereich schwenkbar gegenüber dem Kupplungsgehäuse 153 gehalten ist. Das andere Ende 152 des Bremshebels 156 ist mit einem durch einen Elektromotor 157 bewegbares Verstellelement 158 verbunden. Das Ende 154 des Bremsbandes 160 verläuft etwa tangential zu der Schaltscheibe 104. Parallel hierzu verläuft das Verstellelement 158 und seine Verstellrichtung. Durch ein Verstellen des Verstellelements 158 wird über den an dem Kupplungsgehäuse 153 schwenkbar abgestützten Bremshebel 156 das Bremsband 160 je nach Verstellrichtung stärker oder schwächer über den Reibbelag 127 auf dem Umfang 150 der Schaltscheibe 104 gespannt. Durch ein vollständiges Ausfahren des Verstellelements kann das Bremsband 160 vollständig oder nahezu vollständig von dem Reibbelag 127 der Schaltscheibe abgehoben werden, so dass kein oder nahezu kein Reibkontakt mehr besteht.

Durch das gegen Drehung gehaltenen und auf der Schaltscheibe 104 gespannten Bremsbandes 160 kann ein kontinuierlich veränderbares Bremsmoment auf die Schaltscheibe 104 aufgebracht werden. Übersteigt das Bremsmoment ein bestimmtes Grenzmoment, das im wesentlichen durch das Gegenmoment der Spannklemme 125 und das Gegenmoment infolge der Haftreibung der Mitnehmer 106 in den Laufrillen 109 der Schaltscheibe 104 bestimmt wird, wird die Schaltscheibe 104 gegenüber der Kupplungsnabe 102 zurückgehalten und in die Freilaufstellung überführt. Wie zuvor bereits beschrieben, ist in der Freilaufstellung die Drehmomentübertragung zwischen der Kupplungshülse 103 und der Kupplungsnabe 102 unterbrochen. Der Vorteil der zweiten Ausführungsform der erfindungsgemäßen Drehmomentbegrenzungskupplung 101 liegt nun darin, dass das Bremsband 160 und die Betätigung über den Bremshebel 156 derart dimensioniert sind, dass die nachlaufenden Massen in Form der Arbeitsmaschine sicher bis zum Stillstand abgebremst werden können.

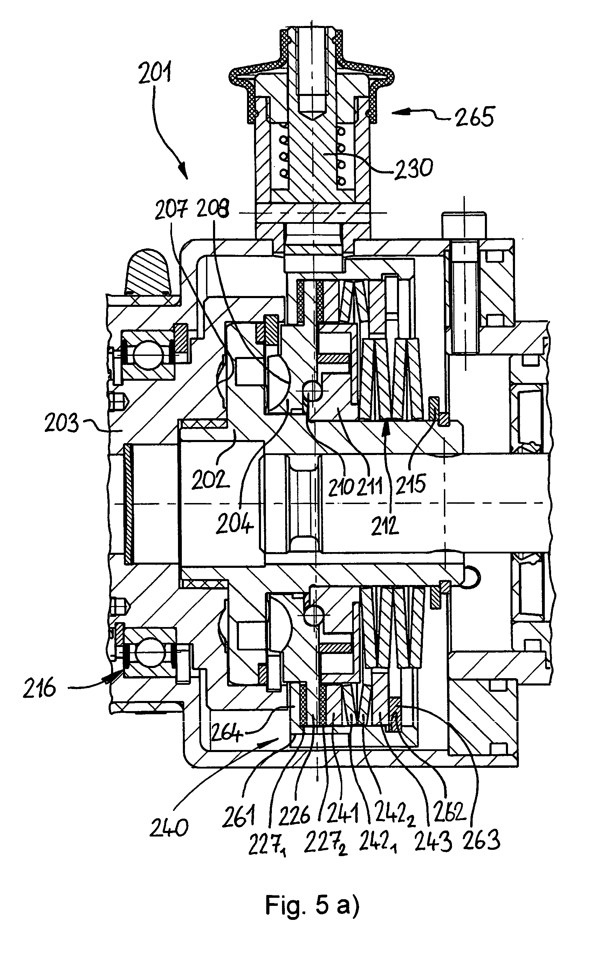

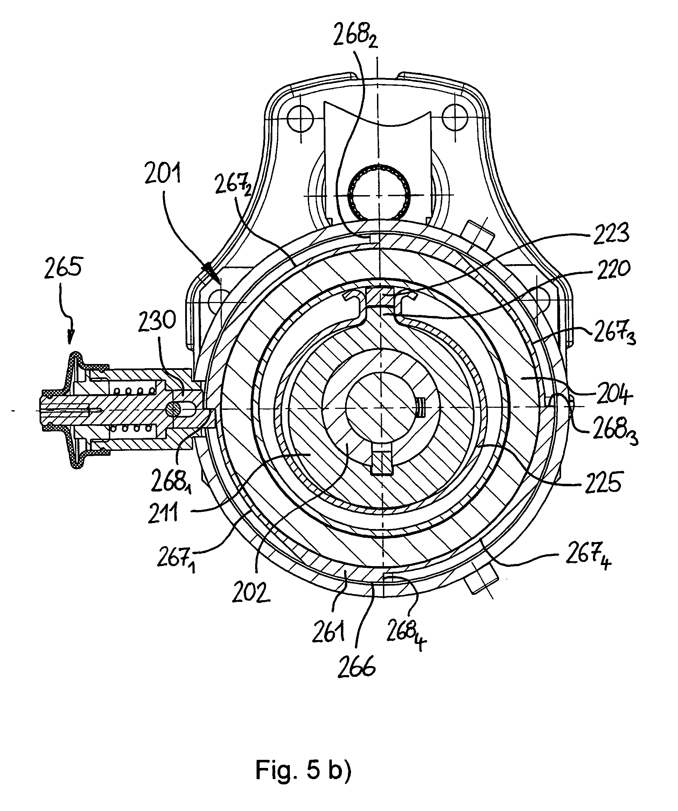

Die Figuren 5a und 5b zeigen eine dritte Ausführungsform einer erfindungsgemäßen Drehmomentbegrenzungskupplung in unterschiedlichen Ansichten und werden im folgenden zusammen beschrieben. Die Funktion entspricht der der zweiten Ausführungsform, wobei der Aufbau mit dem der ersten Ausführungsform vergleichbar ist. Bauteile, die mit Bauteilen der ersten Ausführungsform übereinstimmen, sind mit Bezugszeichen versehen, die um den Wert 100 erhöht sind. Im folgenden werden vornehmlich die Unterschiede der dritten Ausführungsform zu den ersten beiden Ausführungsformen erläutert. Im übrigen wird auf die Beschreibung zur ersten Ausführungsform Bezug genommen.

Die Schaltscheibe 204 ist einstückig mit einer Bremsscheibe 226 ausgebildet, die radial ringförmig von der Schaltscheibe 204 vorsteht. Die Bremsscheibe 226 kann jedoch auch als separates Bauteil ausgebildet und mit der Schaltscheibe 204 verbunden sein. Die Bremsscheibe 226 kann durch eine Bremsanordnung 240 abgebremst werden. Die Bremsanordnung 240 umfasst zwei ringförmige Reibbeläge 227₁, 227₂, eine ringförmige Druckplatte 241, eine Mehrzahl hintereinander angeordneter Druckfedern 242₁, 242₂ in Form von Tellerfedern, eine Spannplatte 243 sowie ein Bremsgehäuse 261.

Das Bremsgehäuse 261 ist topfförmig gestaltet und umschließt die Bremsscheibe 226. Das Bremsgehäuse 261 weist einen Ringabschnitt 264 auf, der radial nach innen vom Bremsgehäuse 261 vorsteht und axial überlappend mit der Bremsscheibe 226 angeordnet ist. Zwischen der Bremsscheibe 226 und dem Ringabschnitt 264 ist einer der Bremsbeläge 227₁ angeordnet. Auf der von dem Ringabschnitt 264 abgewandten Seite der Bremsscheibe 226 ist die Druckplatte 241 angeordnet, wobei zwischen der Druckplatte 241 und der Bremsscheibe 226 ein weiterer Reibbelag 227₂ angeordnet ist.

Auf der von der Bremsscheibe 226 abgewandten Seite der Druckplatte 241 ist ein Tellerfederpaket mit den Druckfedern 242₁, 242₂ in Form von Tellerfedern angeordnet, welche sich axial gegen die Spannplatte 243 abstützen. Die Spannplatte 243 stützt sich wiederum gegen einen Sicherungsring 263 axial ab, der in einer Sicherungsnut 262 des Bremsgehäuses 261 sitzt.

Hierbei sind die Druckfedern 242₁, 242₂ vorgespannt, so dass die Bremsscheibe 226 mit einer vordefinierten Kraft zwischen dem Ringabschnitt 264 und der Druckplatte 241 verspannt ist. Im Normalbetrieb läuft die Bremsanordnung 240 somit mit der Schaltscheibe 204 um.

Das Bremsgehäuse 261 weist auf einer Außenumfangsfläche 266 vier Halteausnehmungen 267₁, 267₂, 267₃, 267₄ auf, die sich jeweils über einen Teil des Umfangs erstrecken. Die Halteausnehmungen 267₁, 267₂, 267₃, 267₄ bilden jeweils eine Haltefläche 268₁, 268₂, 268₃, 268₄, die radial verlaufen. Die Sperrklinke 230 ist im vorliegenden Fall mittels eines Aktuators 265 radial translatorisch bewegbar und greift in einer Sperrstellung in eine der Halteausnehmungen 267₁ ein und stützt sich in Umfangsrichtung gegen die entsprechende Haltefläche 268₁ ab, so dass das Bremsgehäuse 261 gegen Rotation abgestützt ist. In diesem Fall tritt eine Relativbewegung zwischen dem Bremsgehäuse 261 und der Bremsscheibe 226 der Schaltscheibe 204 auf, so dass über die Reibbeläge 227₁, 227₂ eine Reibkraft auf die Bremsscheibe 226 und somit auf die Schaltscheibe 204 einwirkt. Hierdurch wird die Schaltscheibe zunächst in die Freilaufstellung überführt. Im Anschluss daran wird die gesamte Drehmomentbegrenzungskupplung über die Bremsanordnung 240 und die Bremsscheibe 226 abgebremst, so dass nachlaufende Massen abgebremst werden.

### Bezugszeichenliste

- 1, 101, 201: Drehmomentbegrenzungskupplung
- 2, 102, 202: Kupplungsnabe
- 3, 103, 203: Kupplungshülse
- 4, 104, 204: Schaltscheibe
- 5, 105: Durchbruch
- 6, 106: Mitnehmer
- 7, 107, 207: erste Ausnehmung
- 8, 108, 208: zweite Ausnehmung
- 9, 109: erste Laufrille
- 10, 110, 210: Drucklager
- 111, 112, 111, 211: Druckring
- 12, 112, 212: Tellerfederpaket
- 13: Distanzring
- 14, 114: zweite Laufrille
- 15, 115, 215: Stützring
- 16, 216: Wälzlageranordnung
- 17₁, 17₂: Passfeder
- 20₁, 20₂, 120, 220: radialer Vorsprung
- 21₁, 21₂: radialer Vorsprung
- 22₁, 22₂, 122: Passfeder
- 23₁, 23₂, 123, 223: axialer Vorsprung
- 24₁, 24₂, 24₃, 24₄: axialer Vorsprung
- 25, 125, 225: Spannklemmenpaket
- 26, 226: Bremsscheibe
- 27₁, 27₂, 127, 227₁, 227₂: Reibbelag
- 28: Zahnkranz
- 29₁, 29₂, 29ₙ: Zahn
- 30, 230: Sperrklinke
- 31₁, 31₂, 31ₙ: Schaltfläche
- 32₁, 32₂, 32ₙ: Schaltnocken
- 33₁, 33₂, 33ₙ: Schaltfläche
- 34₁, 34₂, 34ₙ: Steuernocken
- 35₁, 35₂, 35ₙ: Anlauffläche
- 38: Anschlagfläche
- 40, 240: Bremsanordnung
- 41,241: Druckplatte
- 42₁, 42₂, 42ₙ, 242₁, 242₂: Druckfedern
- 43, 243: Spannplatte
- 44₁, 44₂, 44₃: Bolzen
- 45₁, 45₂, 45₃: Stift
- 146₁, 146₂, 146₃: Sperrstift
- 147₁, 147₂, 147₃: Nut
- 150: Umfang
- 151: Ende des Bremsbandes
- 152: Ende des Bremshebels
- 153: Kupplungsgehäuse
- 154: Ende des Bremsbandes
- 155: Ende des Bremshebels
- 156: Bremshebel
- 157: Elektromotor
- 158: Verstellelement
- 160: Bremsband
- 261: Bremsengehäuse
- 262: Sicherungsnut
- 263: Sicherungsring
- 264: Ringabschnitt
- 265: Aktuator
- 266: Außenumfangsfläche
- 267₁, 267₂, 267₃, 267₄: Halteausnehmungen
- 268₁, 268₂, 268₃, 268₄: Haltefläche

- A: Längsachse
- S: Schwenkachse
- D: Drehrichtung

## Patentansprüche

1. Drehmomentbegrenzungskupplung, die um eine Längsachse A drehbar angeordnet ist, umfassend
eine Kupplungsnabe (2, 102, 202) die umfangsverteilte Durchbrüche (5, 105) aufweist, in welchen Mitnehmer (6, 106) parallel zur Längsachse A verstellbar gehalten sind,
eine Kupplungshülse (3, 103, 203) die zu den Durchbrüchen (5, 105) korrespondierende erste Ausnehmungen (7, 107, 207) aufweist,
eine Schaltscheibe (4, 104, 204) die zwischen einer Einschaltstellung und
einer Freilaufstellung relativ zur Kupplungsnabe (2, 102, 202) drehbar angeordnet ist, wobei in der Einschaltstellung die Mitnehmer (6, 106) zur Drehmomentübertragung in die ersten Ausnehmungen (7, 107, 207) eingreifen, und
die bei Überschreiten eines vorgegebenen Moments durch eine Abrollbewegung der Mitnehmer (6, 106) von der Einschaltstellung in die Freilaufstellung überführbar ist, wobei die Schaltscheibe (4, 104, 204) zu den Durchbrüchen (5, 105) korrespondierende zweite Ausnehmungen (8, 108, 208) aufweist, in welche die Mitnehmer (6, 106) in der Freilaufstellung eingreifen,
erste Federmittel (25, 125, 225) die die Schaltscheibe (4, 104, 204) in Richtung der Einschaltstellung beaufschlagen,
zweite Federmittel (12, 112, 212) die die Schaltscheibe (4, 104, 204) axial beaufschlagen und die Mitnehmer (6, 106) gegen die Kupplungshülse (3, 103, 203) beaufschlagen,
einen Aktuator (30, 156, 265), der von einer Freigabestellung in eine Bremsstellung verstellbar ist,
**dadurch gekennzeichnet,**
**dass** ein Bremselement.(26, 160, 240) vorgesehen ist, das in Reibkontakt mit der Schaltscheibe (4, 104, 204) bringbar ist, und
**dass** der Aktuator (30, 156, 265) in der Bremsstellung mit dem Bremselement (26, 160, 240) derart zusammenwirkt, dass von dem Bremselement (26, 160, 240) ein Bremsmoment auf die Schaltscheibe (4, 104, 204) ausgeübt wird.

2. Drehmomentbegrenzungskupplung nach Anspruch 1,
**gekennzeichnet dadurch,**
**dass** das Bremselement in der Freigabestellung des Aktuators (30) gegenüber der Schaltscheibe (4) drehbar ist.

3. Drehmomentbegrenzungskupplung nach einem der Ansprüche 1 oder 2,
**gekennzeichnet dadurch,**
**dass** der Aktuator (30) in eine Sperrstellung verstellbar ist, in der er mit der Schaltscheibe (4) derart zusammenwirkt, dass die Schaltscheibe (4) von der Einschaltstellung zur Freilaufstellung überführbar ist.

4. Drehmomentbegrenzungskupplung nach Anspruch 3,
**gekennzeichnet dadurch,**
**dass** der Aktuator (30) in der Sperrstellung durch Drehung der Kupplungsnabe (2) derart mit dieser zusammenwirkt, dass der Aktuator (30) in die Bremsstellung überführbar ist.

5. Drehmomentbegrenzungskupplung nach einem der Ansprüche 1 bis 4,
**gekennzeichnet dadurch,**
**dass** der Aktuator (30) in der Bremsstellung und in der Sperrstellung mit dem Bremselement (26) derart zusammenwirkt, dass das Bremselement (26) gegen Drehung gehalten wird.

6. Drehmomentbegrenzungskupplung nach einem der Ansprüche 1 bis 5,
**gekennzeichnet dadurch,**
**dass** dritte Federmittel (42, 242) vorgesehen sind, die das Bremselement (26, 226) zumindest mittelbar axial gegen die Schaltscheibe (4, 204) beaufschlagen.

7. Drehmomentbegrenzungskupplung nach Anspruch 6,
**gekennzeichnet dadurch,**
**dass** die dritten Federmittel Druckfedern (42₁, 42₂, 42ₙ, 242₁, 242₂) umfassen, die über einen Umfang verteilt angeordnet sind.

8. Drehmomentbegrenzungskupplung nach Anspruch 6 oder 7,
**gekennzeichnet dadurch,**
**dass** sich die dritten Federmittel (42, 242) auf ihrer der Schaltscheibe (4, 204) abgewandten Seite an einer Spannplatte (43, 243) abstützen, wobei die dritten Federmittel (42) und die Spannplatte (43, 243) zumindest mittelbar mit der Schaltscheibe (4) drehfest verbunden sind.

9. Drehmomentbegrenzungskupplung nach einem der Ansprüche 1 bis 8,
**gekennzeichnet dadurch,**
**dass** der Aktuator als Sperrklinke (30) gestaltet ist.

10. Drehmomentbegrenzungskupplung nach einem der Ansprüche 1 bis 9,
**gekennzeichnet dadurch,**
**dass** das Bremselement eine Bremsscheibe (26, 226) umfasst.

11. Drehmomentbegrenzungskupplung nach Anspruch 1,
**gekennzeichnet dadurch,**
**dass** das Bremselement einen Umfang der Schaltscheibe (4) umschlingt, wobei das Bremselement insbesondere ein Bremsband (160) umfasst.

12. Drehmomentbegrenzungskupplung nach Anspruch 11,
**gekennzeichnet dadurch,**
**dass** das Bremselement (160) mittels des Aktuators (156) drehfest gegenüber der Schaltscheibe (104) gehalten ist.

13. Drehmomentbegrenzungskupplung nach einem der Ansprüche 11 oder 12,
**gekennzeichnet dadurch,**
**dass** ein Ende (154) des Bremselements (160) gegenüber der Schaltscheibe (104) zumindest in einer überwiegend tangentialen Richtung verstellbar ist.

14. Drehmomentbegrenzungskupplung nach Anspruch 13,
**gekennzeichnet dadurch,**
**dass** der Aktuator (156) an dem verstellbaren Ende (154) des Bremselements (160) angreift.

15. Drehmomentbegrenzungskupplung nach einem der Anspruch 1 oder 11 bis 14,
**gekennzeichnet dadurch,**
**dass** der Aktuator einen elektrisch angesteuerten und schwenkbar angeordneten Bremshebel (156) umfasst.

## Claims

1. Torque limiting coupling, which is rotatably arranged around a longitudinal axis A, comprising
a coupling hub (2, 102, 202), which has circumferentially distributed through openings (5, 105), in which drivers (6, 106) are adjustably held parallel to the longitudinal axis A,
a coupling sleeve (3, 103, 203), which has first recesses (7, 107, 207) corresponding to the through openings (5, 105),
a shifting disc (4, 104, 204), which is rotatably arranged between a switched-on position and an idling position relative to the coupling hub (2, 102, 202), wherein in the switched-on position, the drivers (6, 106) engage in the first recesses (7, 107, 207) for torque transmission, and which can be transferred by means of a rolling movement of the drivers (6, 106) from the switched-on position to the idling position, when exceeding a predetermined torque, wherein the shifting disc (4, 104, 204) has second recesses (8, 108, 208) corresponding to the through openings (5, 105) and in which the drivers (6, 106) engage in the idling position,
first spring means (25, 125, 225), which act upon the shifting disc (4, 104, 204) in direction to the switched-on position,
second spring means (12, 112, 212), which act axially upon the shifting disc (4, 104, 204) and which act on the drivers (6, 106) against the coupling sleeve (3, 103, 203),
an actuator (30, 156, 265), which is displaceable from a released position to a braking position,
**characterised in**
**that** a braking element (26, 160, 240) is provided, which can be brought into frictional contact with the shifting disc (4, 104, 204), and
**that** the actuator (30, 156, 265) interacts with the braking element (26, 160, 240) in the braking position such, that a braking torque is acted upon the shifting disc (4, 104, 204) by the braking element (26, 160, 240).

2. Torque limiting coupling according to claim 1,
**characterised in**
**that** in the released position of the actuator (30) the braking element is rotatable relative to the shifting disc (4).

3. Torque limiting coupling according to one of claims 1 or 2,
**characterised in**
**that** the actuator (30) is displaceable into a locking position, in which it interacts with the shifting disc (4) such, that the shifting disc (4) is transferable from the switched-on position to the idling position.

4. Torque limiting coupling according to claim 3,
**characterised in**
**that** the actuator (30) interacts with the coupling hub (2) in the locking position by means of rotating the coupling hub (2) such, that the actuator (30) is transferrable into the braking position.

5. Torque limiting coupling according to one of claims 1 to 4,
**characterised in**
**that** the actuator (30) interacts with the braking element (26) in the braking position and in the locking position such, that the braking element (26) is held against rotation.

6. Torque limiting coupling according to one of claims 1 to 5,
**characterised in**
**that** third spring means (42, 242) are provided, which urge the braking element (26, 226) at least indirectly axially against the shifting disc (4, 204).

7. Torque limiting coupling according to claim 6,
**characterised in**
**that** the third spring means comprise compression springs (42₁, 42₂, 42ₙ, 242₁, 242₂), which are arranged distributed along a circumference.

8. Torque limiting coupling according to claim 6 or 7,
**characterised in**
**that** the third spring means (42, 242) are supported on their side facing away from the shifting disc (4, 204) on a clamping plate (43, 243), wherein the third spring means (42) and the clamping plate (43, 243) are at least indirectly non-rotationally connected to the shifting disc (4).

9. Torque limiting coupling according to one of claims 1 to 8,
**characterised in**
**that** the actuator is formed as a locking pawl (30).

10. Torque limiting coupling according to one of claims 1 to 9,
**characterised in**
**that** the braking element comprises a braking disc (26, 226).

11. Torque limiting coupling according to claim 1,
**characterised in**
**that** the braking element encloses a circumference of the shifting disc (4), wherein the braking element comprises especially a brake band (160).

12. Torque limiting coupling according to claim 11,
**characterised in**
**that** the braking element (160) is non-rotationally held relative to the shifting disc (104) by means of the actuator (156).

13. Torque limiting coupling according to one of claim 11 or 12,
**characterised in**
**that** an end (154) of the braking element (160) is displaceable, at least in a predominantly tangential direction, relative to the shifting disc (104).

14. Torque limiting coupling according to claim 13,
**characterised in**
**that** the actuator (156) engages the displaceable end (154) of the braking element (160).

15. Torque limiting coupling according to one of claims 1 or 11 to 14,
**characterised in**
**that** the actuator comprises a braking lever (156) which is electrically controlled and pivotably arranged.

## Revendications

1. Couplage de limitation de couple de rotation, qui est disposé rotativement autour d'un axe longitudinal A, comprenant
un bossage de couplage (2, 102, 202), qui présente des percées (5, 105) réparties sur la circonférence, dans lesquelles des doigts d'entraînement (6, 106) sont maintenus de manière orientable parallèlement à l'axe longitudinal A,
un manchon de couplage (3, 103, 203), qui présente des premiers évidements (7, 107, 207) correspondant aux percées (5, 105),
un disque de commande (4, 104, 204), qui est disposé rotativement entre une position active et une position de repos relativement au bossage de couplage (2, 102, 202), dans lequel dans la position active les doigts d'entraînement (6, 106) viennent en prise à des fins de transmission de couple de rotation dans les premiers évidements (7, 107, 207), et peuvent être passés en cas de dépassement d'un couple prescrit de la position active à la position de repos au moyen d'un mouvement de roulement des doigts d'entraînement (6, 106), dans lequel le disque de commande (4, 104, 204) présente des deuxièmes évidements (8, 108, 208) correspondants aux percées (5, 105), dans lesquels les doigts d'entraînement (6, 106) viennent en prise dans la position de repos,
des premiers moyens de ressort (25, 125, 225), qui sollicitent le disque de commande (4, 104, 204) dans la direction de la position active,
des deuxièmes moyens de ressort (12, 112, 212), qui sollicitent axialement le disque de commande (4, 104, 204) et les doigts d'entraînement (6, 106) sollicitent en sens contraire le manchon de couplage (3, 103, 203),
un actionneur (30, 156, 265), qui est orientable d'une position active à une position de freinage,
**caractérisé en ce que**
un élément de freinage (26, 160, 240) est prévu, lequel peut être amené en contact de friction avec le disque de commande (4, 104, 204), et
l'actionneur (30, 156, 265) coopère dans la position de freinage avec l'élément de freinage (26, 160, 240), de telle sorte que un couple de freinage soit exercé par l'élément de freinage (26, 160, 240) sur le disque de commande (4, 104, 204).

2. Couplage de limitation de couple de rotation selon la revendication 1, **caractérisé en ce que** l'élément de freinage peut être tourné dans la position active de l'actionneur (30) vis-à-vis du disque de commande (4).

3. Couplage de limitation de couple de rotation selon un des revendications 1 ou 2, **caractérisé en ce que** l'actionneur (30) est orientable dans une position de blocage, dans laquelle il coopère avec le disque de commande (4) de telle sorte que le disque de commande (4) puisse être passé de la position active à la position de repos.

4. Couplage de limitation de couple de rotation selon la revendication 3, **caractérisé en ce que** l'actionneur (30) coopère dans la position de blocage par rotation du bossage de couplage (2) avec celui-ci de telle sorte que l'actionneur (30) puisse être passé dans la position de freinage.

5. Couplage de limitation de couple de rotation selon une des revendications 1 à 4, **caractérisé en ce que** l'actionneur (30) coopère dans la position de freinage et dans la position de blocage avec l'élément de freinage (26) de telle sorte que l'élément de freinage (26) soit protégé contre une rotation.

6. Couplage de limitation de couple de rotation selon une des revendications 1 à 5, **caractérisé en ce que** des troisièmes moyens de ressort (42, 242) sont prévus, qui sollicitent l'élément de freinage (26, 226) au moins indirectement axialement contre le disque de commande (4, 204).

7. Couplage de limitation de couple de rotation selon la revendication 6, **caractérisé en ce que** les troisièmes moyens de ressort comprennent des ressorts de pression (42₁, 42₂, 42ₙ, 242₁, 242₂), qui sont répartis sur une circonférence.

8. Couplage de limitation de couple de rotation selon les revendications 6 ou 7, **caractérisé en ce que** les troisièmes moyens de ressort (42, 242) s'appuient sur leur côté qui se détourne du disque de commande (4, 204) sur une plaque de serrage (43, 243), dans lequel les troisièmes moyens de ressort (42) et la plaque de serrage (43, 243) sont reliés de manière solidaire en rotation au moins indirectement avec le disque de commande (4).

9. Couplage de limitation de couple de rotation selon une des revendications 1 à 8, **caractérisé en ce que** l'actionneur est conçu comme un cliquet de verrouillage (30).

10. Couplage de limitation de couple de rotation selon une des revendications 1 à 9, **caractérisé en ce que** l'élément de freinage comprend un disque de freinage (26, 226).

11. Couplage de limitation de couple de rotation selon la revendication 1, **caractérisé en ce que** l'élément de freinage enserre une circonférence du disque de commande (4), dans lequel l'élément de freinage comprend notamment une bande de freinage (160).

12. Couplage de limitation de couple de rotation selon la revendication 11, **caractérisé en ce que** l'élément de freinage (160) est maintenu de manière solidaire en rotation par rapport au disque de commande (104) au moyen de l'actionneur (156).

13. Couplage de limitation de couple de rotation selon une des revendications 11 ou 12, **caractérisé en ce que** une extrémité (154) de l'élément de freinage (160) est orientable par rapport au disque de commande (104) au moins dans une direction essentiellement tangentielle.

14. Couplage de limitation de couple de rotation selon la revendication 13, **caractérisé en ce que** l'actionneur (156) vient en prise avec l'extrémité orientable (154) de l'élément de freinage (160).

15. Couplage de limitation de couple de rotation selon une des revendications 1 ou 11 à 14, **caractérisé en ce que** l'actionneur comprend un levier de freinage (156) commandé électriquement et disposé de manière basculante.
